Europäisches Patentamt

(19) European Patent Office

Office européen des brevets

(11) EP 0 833 319 A2

## (12) EUROPEAN PATENT APPLICATION

(43) Date of publication:
01.04.1998 Bulletin 1998/14

(51) Int. Cl.$^6$: **G11B 13/04**

(21) Application number: 97118775.2

(22) Date of filing: 19.01.1994

(84) Designated Contracting States:
AT BE CH DE DK ES FR GB GR IE IT LI LU MC NL PT SE

(30) Priority: 21.01.1993 JP 8596/93
25.03.1993 JP 92219/93
09.04.1993 JP 107423/93
27.07.1993 JP 205682/93
02.11.1993 JP 297504/93
19.11.1993 JP 314114/93

(62) Document number(s) of the earlier application(s) in accordance with Art. 76 EPC:
94300402.8 / 0 609 013

(71) Applicant:
MATSUSHITA ELECTRIC INDUSTRIAL CO., LTD.
Kadoma-shi Osaka (JP)

(72) Inventors:
• Oshima, Mitsuaki
Kyoto (JP)
• Shimizu, Ryosuke
Hirakata-shi, Osaka (JP)

• Koudo, Toshikazu
Moriguchi-shi, Osaka (JP)
• Yoshiura, Tsukasa
Katano-shi, Osaka (JP)
• Matsuura, Takumi
Minami-ku, Kyoto (JP)
• Tanaka, Mitiro
Ikoma-shi, Nara-ken (JP)
• Tan, Satoshi
Katano-shi, Osaka (JP)

(74) Representative:
Senior, Alan Murray
J.A. KEMP & CO.,
14 South Square,
Gray's Inn
London WC1R 5LX (GB)

Remarks:
This application was filed on 29 - 10 - 1997 as a divisional application to the application mentioned under INID code 62.

(54) **Disc-shaped recording medium**

(57) A disk-shaped recording medium divided into zones having data sectors containing an identifier region and a data region. The data regions of a zone have a capacity of M bytes more than those of the next inward zone.

FIG. 1

EP 0 833 319 A2

Printed by Xerox (UK) Business Services
2.15.12/3.4

**Description**

This invention relates to a recording medium and to an apparatus for recording and reproducing information on and from the recording medium.

Japanese published unexamined patent applications 56-163536, 57-6449, 57-212642, and 60-70543 disclose a recording medium having both a magnetic recording portion and an optical recording portion.

Japanese published unexamined patent application 2-179951 discloses a recording medium which has an optical recording portion and a magnetic recording portion at opposite sides thereof respectively. Japanese patent application 2-179951 also discloses an apparatus which includes an optical head facing the optical recording portion of the recording medium for reading out information from the optical recording portion, a magnetic head facing the magnetic recording portion of the recording medium for recording and reproducing information into and from the magnetic recording portion, and a mechanism for moving at least one of the optical head and the magnetic head in accordance with rotation of the recording medium. In the apparatus of Japanese patent application 2-179951, during the processing of the information read out from the magnetic recording portion, a decision is made as to whether or not the information recorded on the optical recording portion is necessary, and a step of reading out the information from the optical recording portion is executed when the information on the optical recording portion is decided to be necessary.

It is an object of this invention to provide an improved recording medium.

A first aspect of this invention provides a disk-shaped recording medium comprising:

a disk-shaped recording surface;

a plurality of concentric recording tracks extending on the recording surface and for storing digital data;

said recording tracks being directed into W data sectors along a circumferential direction, the data sectors extending in approximately equal angular ranges, wherein W denotes a predetermined integer equal to one or more;

said recording surface being divided into N zones along a radial direction, wherein each of the N zones has R recording tracks, wherein N denotes a predetermined integer equal to two or more and R denotes a predetermined integer equal to one or more;

an identifier region provided in each of the data sectors for identifying said each of the data sectors; and

a data region provided in each of the data sectors for storing user data;

wherein a data recording capacity of a data region of a data sector in first one of the zones is greater by M byte or bytes than a data recording capacity of a data region of a data sector in a second one of the zones which extends immediately inward of said first one of the zones, wherein M denotes a predetermined integer equal to one or more.

A second aspect of this invention provides a recording and reproducing apparatus for recording and reproducing data to or from a disk-shaped recording medium according to any one of the preceding claims, the apparatus comprising:

a head for recording and reproducing identifier and user data into and from respective regions of the recording medium.

The present invention will be further described hereinafter with reference to exemplary embodiments and the accompanying drawings, in which:

Fig. 1 is a diagram of a disk-shaped recording medium in this invention.
Fig. 2 is a diagram of a recording and reproducing apparatus for the disk-shaped recording medium of Fig. 1;
Fig. 3 is a diagram of another recording and reproducing apparatus for the recording medium of this invention;
Fig. 4 is a diagram of another recording and reproducing apparatus for the recording medium of this invention;

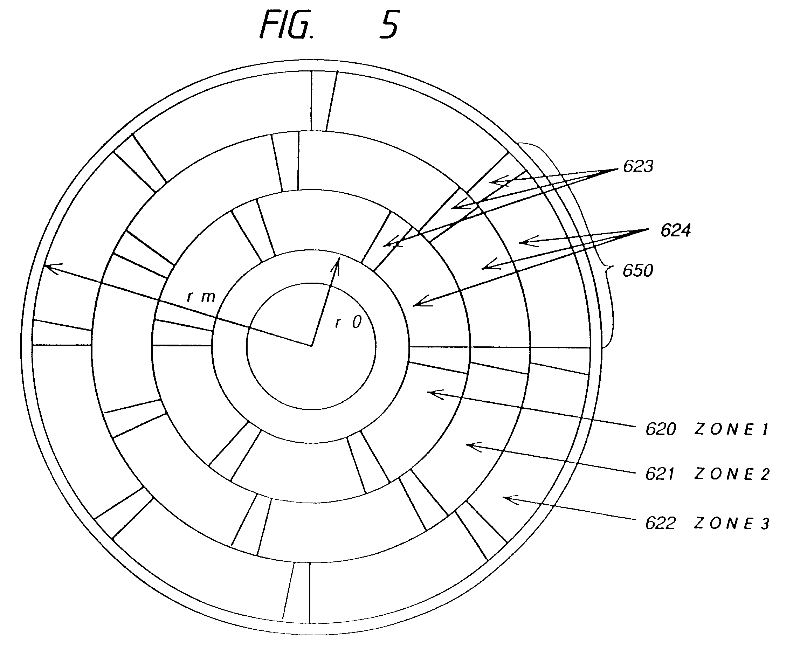

Fig. 5 is a diagram of a disk-shaped recording medium;

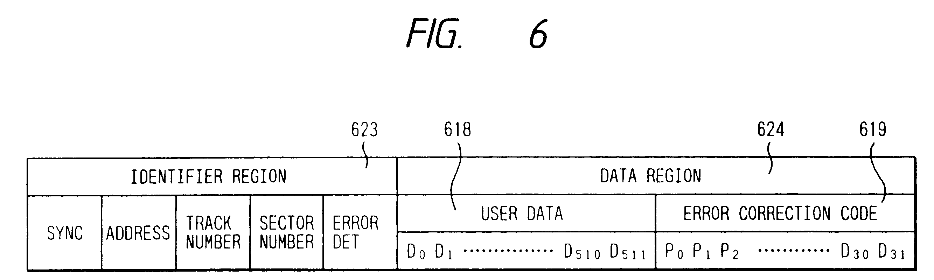

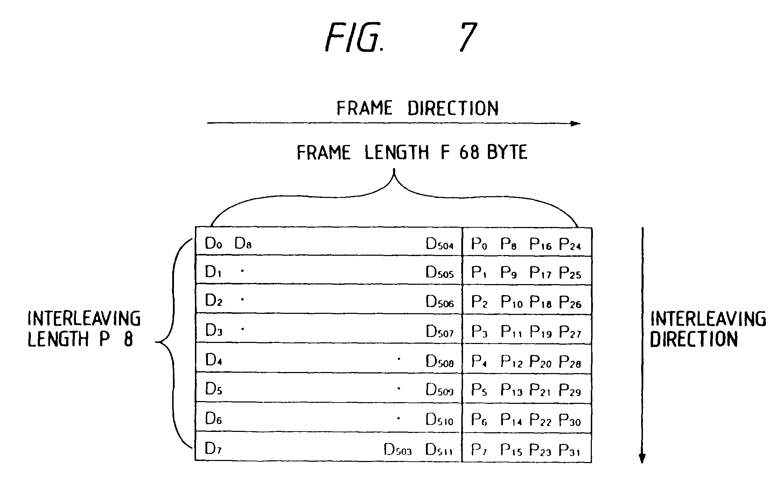

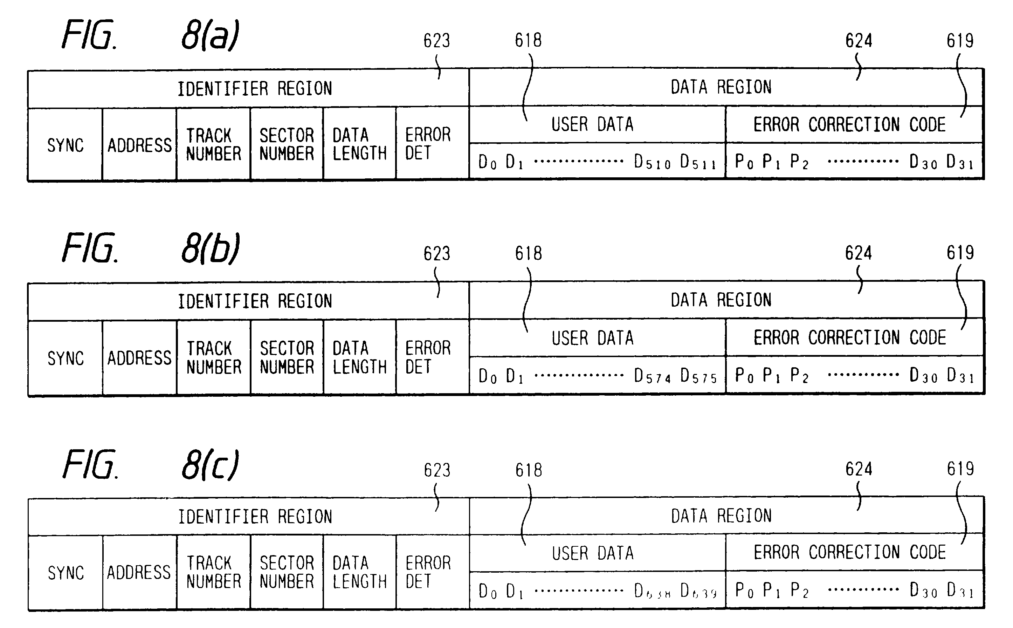

Fig. 6 is a diagram of a data sector structure;
Fig. 7 is a diagram of an error correction code;
Fig. 8(a) is a diagram of a data sector structure in this invention;
Fig. 8(b) is a diagram of a data sector structure in this invention;
Fig. 8(c) is a diagram of a data sector structure in this invention;
Fig. 9(a) is a diagram of a data sector structure in this invention;
Fig. 9(b) is a diagram of a data sector structure in this invention;
Fig. 9(c) is a diagram of a data sector structure in this invention;
Fig. 10(a) is a diagram of the arrangement of an error correction code in this invention;
Fig. 10(b) is a diagram of the arrangement of an error correction code in this invention;

Fig. 10(c) is a diagram of the arrangement of an error correction code in this invention;
Fig. 11 is a diagram of a disk-shaped recording medium in this invention;
Fig. 12(a) is a diagram of the relation between a logic sector and a data sector;
Fig. 12(b) is a diagram of an interleaving arrangement;
Fig. 12(c) is a diagram of a medium format;

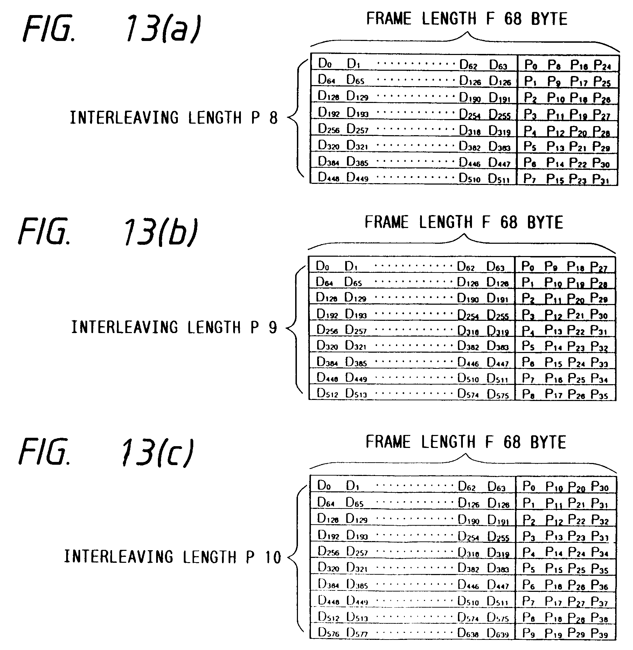

Fig. 13(a) is a diagram of the arrangement of an error correction code in this invention;
Fig. 13(b) is a diagram of the arrangement of an error correction code in this invention;
Fig. 13(c) is a diagram of the arrangement of an error correction code in this invention;
Fig. 14(a) is a diagram of the arrangement of an error correction code in this invention;
Fig. 14(b) is a diagram of the arrangement of an error correction code in this invention;
Fig. 14(c) is a diagram of the arrangement of an error correction code in this invention.

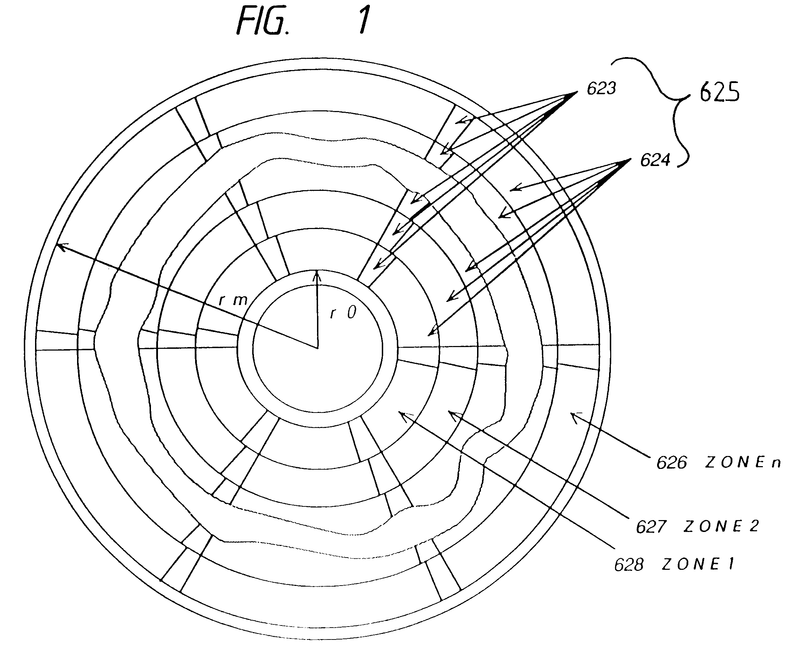

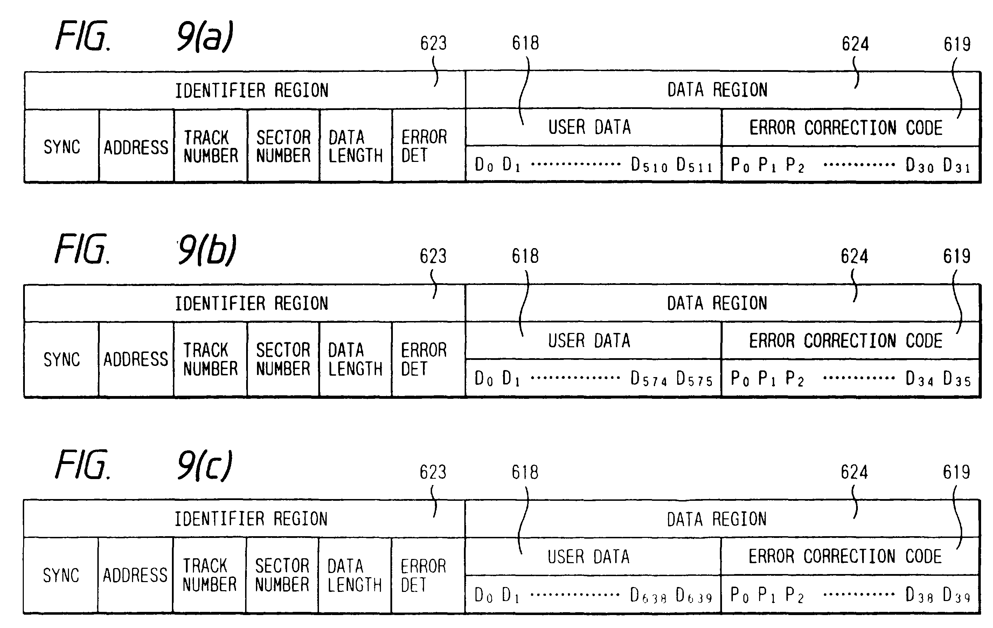

A first embodiment of this invention relates to a recording medium of the disk type. With reference to Fig. 1, a data sector 625 has an identifier region 623 and a data region 624. The data sector 625 is divided into segments at approximately equal angular intervals along a circumferential direction. In this embodiment, the data sector 625 is divided into six segments, and one track has six sectors. It should be noted that one track may have one or more sectors. Each of track groups 626, 627, and 628 is referred to as ZONE. Each ZONE has one or more data recording tracks concentrically arranged. Figs. 8(a), 8(b), and 8(c) respectively show the structures of data sectors 625 of ZONE 1 to ZONE 3. The data sector 625 has an identifier region 623 and a data region 624. The identifier region 623 stores data of an error detection code for the identifier reproduced data, a code representing the length of data in the data region, a sector number corresponding to the order number of the currently-read sector from a sector starting point (for example, an index position), a track number equal to the order number of the track corresponding to the reproduced data which is counted from a track starting point, an address mark representing the head of the identifier, and a sync pattern for synchronizing the reproduced data and an apparatus clock signal. The data region 624 stores user data 618 and an error check code 619. The error check code 619 may be omitted.

Fig. 8(a) shows the structure of the data sector 625 of ZONE 1. Fig. 8(b) shows the structure of the data sector 625 of ZONE 2. Fig. 8(c) shows the structure of the data sector 625 of ZONE 3. ZONE 1 stores 512-byte user data. ZONE 2 stores 576-byte user data. ZONE 3 stores 640-byte user data. In this embodiment, ZONE n stores an amount of user data which is given by the following equation (3).

$$ZONE(n) = 512 + 64 \times (n - 1) \tag{3}$$

The error correction code length is euqal to 32 bytes for each ZONE. Accordingly, the ZONE number N is given by the following equation (4).

$$N = int\{(rm/rO - 1)(l + DO + E)/M\} + 1 \tag{4}$$

where I denotes the capacity of the identifier region; rO denotes the radius of the innermost track; rm denotes the radius of the outermost track; L denotes the linear (line) recording density; DO denotes the user data length of the innermost track; E denotes the error correction code length; and M denotes an increment in recording capacity between radially neighbouring ZONE's. In this embodiment the user data length DO is equal to 512 bytes, and the increment M is equal to 64 bytes. It should be noted that the increment M agrees with the difference in recording capacity between first ZONE and second ZONE immediately outward of the first ZONE. By using DO and M, the equation (3) is rewritten as follows:

$$ZONE(n) = DO + M \times (n - 1) \tag{5}$$

In an example where I - 40 (byte); DO = 512 (byte); rO - 25 (mm); rm = 38 (mm); E = 32 (byte); and M = 64 (byte), the ZONE number N is given as:

$$N = int\{4.75\} + 1 = 5 \tag{6}$$

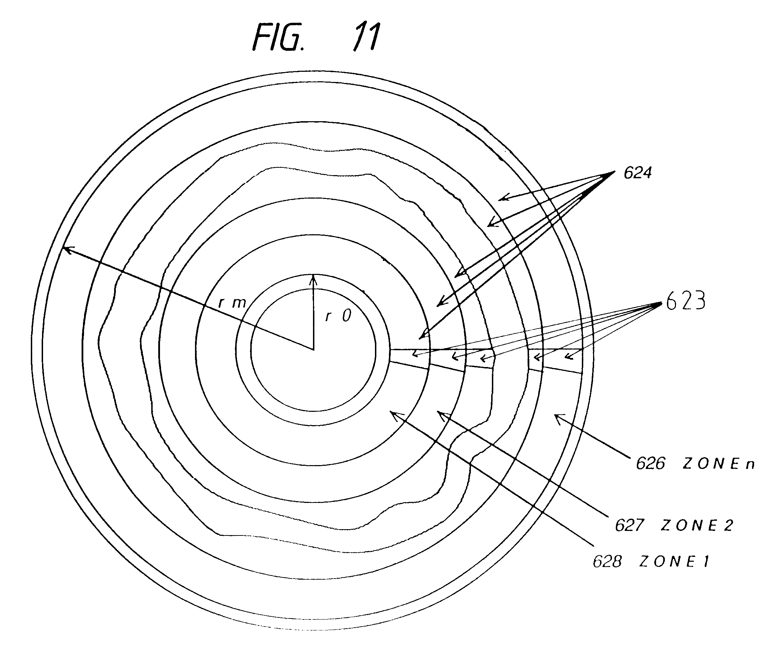

Thus, there are five ZONE's. According to the equation (4), the ZONE number N increases as the user data length DO increases. In an arrangement of Fig. 11 where one data track has one sector, the user data length DO can be increased by six times relative to the arrangement of Fig. 1 which has six sectors per data track. In the arrangement of Fig. 11, the ZONE number N can be equal to 26. The increment M may be set to 32 bytes. In this case, the ZONE number N can be doubled. It is known from the equation (4) that the ZONE number N is independent of the linear recording density L. Accordingly, even in the case of a recording medium having a low linear recording density, the ZONE number N can be freely set. In this way, the ZONE number N can be freely set while the user data length DO and the increment M are used as parameters. Appropriate setting of the ZONE number N enables efficient recording of data into the recording medium 600.

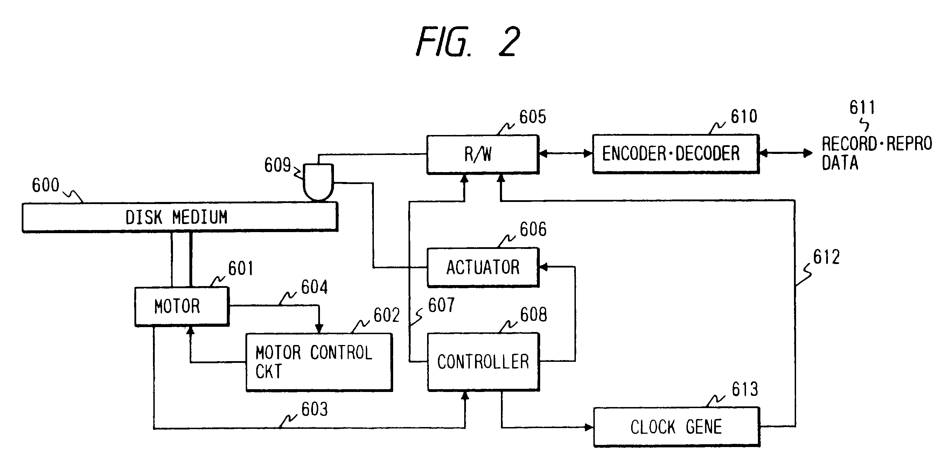

With reference to Fig. 2, recording and reproduction will now be described. In Fig. 2, the disk-type recording medium 600 is rotated at a constant speed by a spindle motor 601 and a motor control circuit 602. First a controller 608 provides an actuator 606 with a command of locating or positioning a recording and reproducing head 609 at a track starting poiont (for example, a point above an innermost track). Then, the controller 608 sets an R/W clock signal 612 for recording data into ZONE 1. Subsequently, the synchronization with an index signal 603 is established, and an R/W timing signal 607 for commanding a writing process is outputted to an R/W circuit 605. The R/W circuit 605 adds an identifier of Figs. 8(a), 8(b), and 8(c) to record data 611 in response to the R/W timing signal 607, and the resultant data is encoded by a data encoder 610 into a record and reproduction code (for example, MFM, 1-7 code, or 2-7 code). The record and reproduction code is output to the recording head 609, being recorded on the disk-type recording medium 600. Then, the controller 608 feeds the actuator 606 with a command of locating or positioning the head at a next track, and waits for the index signal 603. Subsequently, the controller 608 outputs the R/W timing signal 607 to the R/W circuit 605 so that data is recorded into the disk-type recording medium 600. These processes are reiterated. When the recording track reaches ZONE 2, the controller 608 outputs a command to a clock signal generator 613 to generate an R/W clock signal 612 corresponding to ZONE 2. In the arrangement of Figs. 8(a), 8(b) and 8(c), when the data capacity of the identifier region is equal to 40 bytes, it is good that the R/W clock signal 612 for ZONE 2 is equal to that for ZONE 1 multiplied by the following value:

$$(40 + 576 + 32)/(40 + 512 + 32) = 1.1096$$

In addition, it is good that the R/W clock signal 612 for ZONE 3 is equal to that for ZONE 1 multiplied by 1.2192. The R/W clock signal 612 is set for every ZONE in this way, and the recording on each track is done. Consequently, a disk-shaped recording medium such as shown in Fig. 1 is made.

The reproduction will now be described. First, the controller 608 feeds the actuator 606 with a command of locating or positioning the reproducing head 609 at a tack subjected to the reproduction, so that the reproducing head 609 is located accordingly. Then, the controller 608 controls the clock signal generator 613 to set an R/W clock signal 612 corresponding to ZONE of the track subjected to the reproduction. A read timing signal 607 is output to the R/W circuit 605. The R/W circuit 605 establishes the synchronization between the R/W clock signal 612 and reproduced data from the reproduced head 609 in response to the sync pattern in the identifier region 623 of Figs. 8(a), 8(b) and 8(c). Then, the address mark is detected. The track number, the sector number, and the record data length are read out. The three pieces of the readout data are checked in response to the error detection code. A data decoder 610 demodulates or recovers the digital data in the data region 624 which has been reproduced by the R/W circuit 605. The data decoder 610 outputs the demodulated digital data as reproduced data 611. The data decoder 610 detects the information of the record data length which is stored in the identifier region 623, and continues the outputting of the data until the end of the data region 624. In the case where the error correction code 619 is added as shown in Figs. 8(a), 8(b) and 8(c), the data decoder 610 executes an error correcting process.

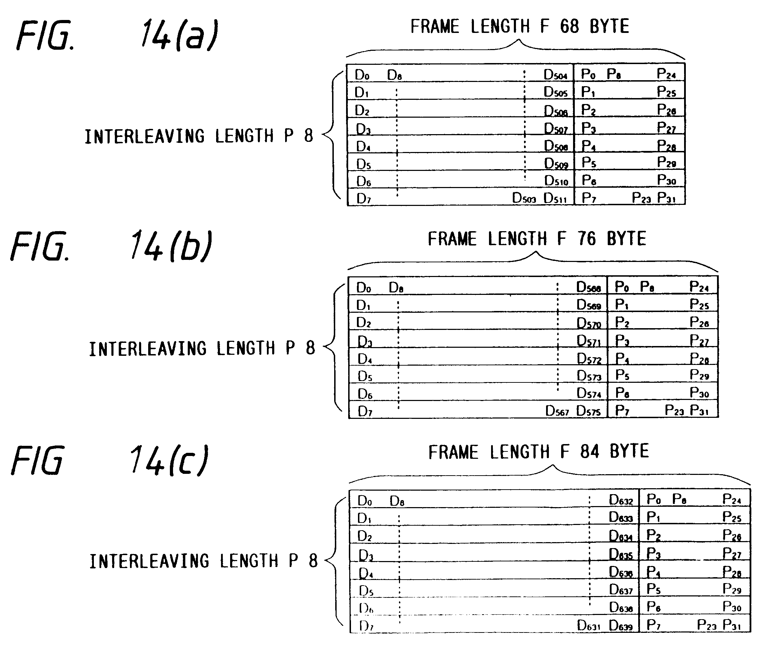

In Figs. 8(a), 8(b), and 8(c), the increment M is equal to 64 bytes and the error correction code has 32 bytes which are used in the equation (5). Under these conditions, the interleaving length P is fixed, and the frame length is increased by M/P =8 bytes. Four bytes of the error correction code 619 is added to each frame. The increment M is equal to, for example, a positive integer. In an arrangement of Figs. 14(a), 14(b), and 14(c), it is preferable that the increment M is equal to an integral multiple of P (that is, equal to P times an integer). Generally, in the case where four bytes of an error correction code is added to each frame, the number of bits of successive errors which can be corrected is given as:

$$(2 \times P - 1) \times 8 + 1 \text{ bit}$$

where P denotes an interleaving length. In the arrangement of Figs. 14(a), 14(b), and 14(c), since the interleaving lengths P are equal for respective ZONE's, the ability of correcting successive errors remains equal with respect to errors at an inner area and errors at an outer area. Most of successive errors are caused by scratches on outer areas of recording media. An outer area of a recording medium is more liable to a large scratch than an inner area thereof is.

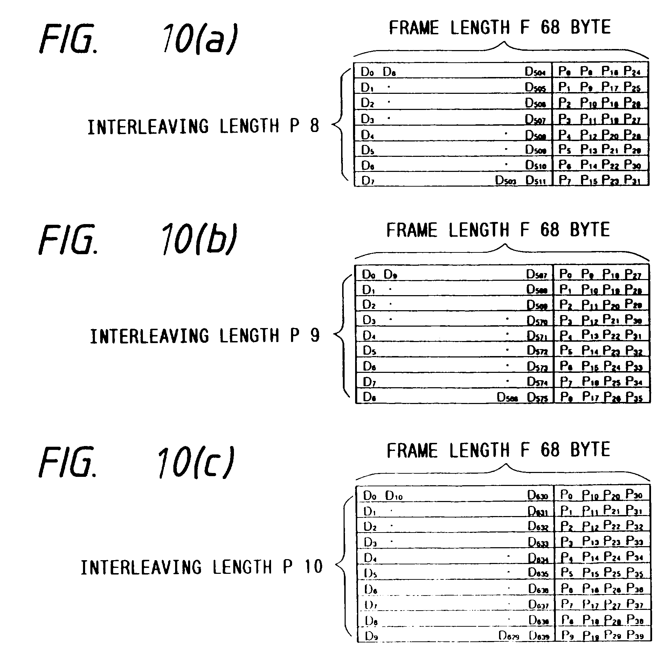

In the arrangement of Figs. 9(a), 9(b), and 9(c), a greater amount of the error correction code is added to ZONE at a position closer to the outer edge of a recording medium, so that the ability of correcting successive errors is increased for an outer area of the recording medium. In this case, the error correction code is generated and designed as shown in Figs. 10(a), 10(b), and 10(c). In Figs. 10(a), 10(b), and 10(c), the interleaving length P of innermost ZONE 1 is equal to 8 so that successive errors in 121 bits are allowed. The interleaving length P of ZONE 2 is equal to 9 so that successive errors in 137 bits are allowed. The interleaving length P of ZONE 3 is equal to 10 so that successive errors in 153 bits are allowed. In this way, the ability of correcting successive errors increases as a position is closer to the outer edge of the recording medium. In the arrangement of Figs. 10(a), 10(b), and 10(c), the degree of redundancy caused by the error correction code is given as follows:

$$ZONE\ 1\ 32/512 \times 100 = 6.25\ (\%)$$

$$ZONE\ 2\ 36/576 \times 100 = 6.25\ (\%)$$

$$ZONE\ 3\ 40/640 \times 100 = 6.25\ (\%)$$

As indicated above, the amount of the error correction code 619 for ZONE (n) is greater by 4 bytes than that for ZONE (n-1). The amount of user data 618 is greater by 64 bytes, and the degree of redundancy remains constant. In this way, the ability of correcting successive errors increases without increasing the degree of redundancy as a position is closer to the outer edge of the recording medium. It is preferable that the increment M is equal to an integral multiple of the frame length F (that is, equal to an integer times the frame length F).

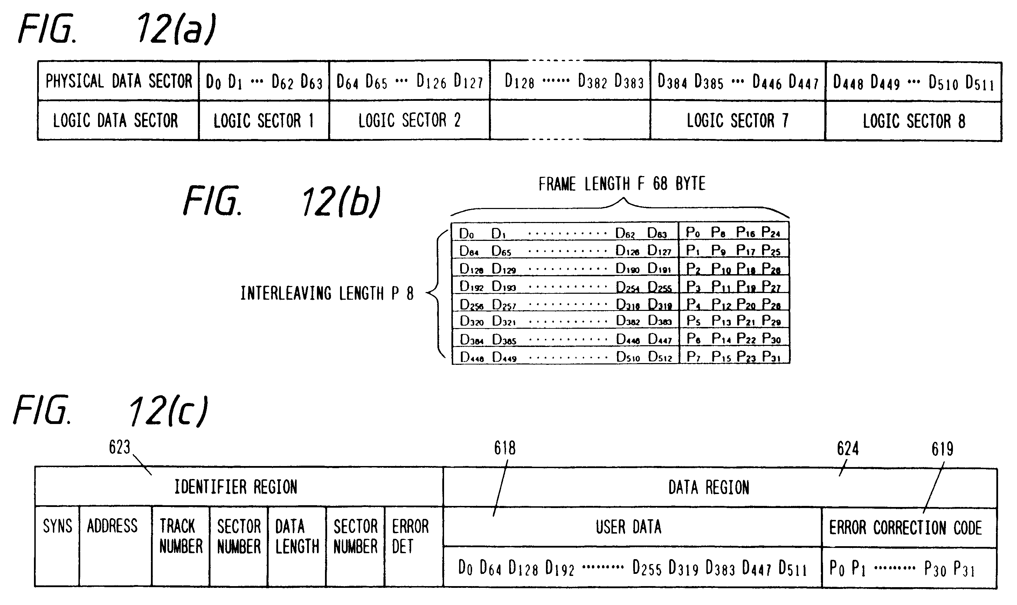

As previously described, the recording efficiency is maximized when one track has one data sector 625. In the case where one track has one data sector 625, since the unit of recording and reproduction is large and the data mount varies from track to track, logically handling of the data tends to be troublesome. In an arrangement of Fig. 12(a) where user data recorded into the data sector 625 is divided into logic sectors, the unit of reproduction corresponds to each logic sector so that handling of the data can be easier. In the case where the error correction code is generated according to the system same as the system of Figs. 10(a), 10(b), and 10(c), the reproduction on one logic sector requires the execution of error correction of the frames. In Fig. 12(a), to execute the reproduction on the logic sector 1, it is sufficient to reproduce data D0 to D63. The data D0 to D63 are dispersed over the frames. Since the error correction is executed frame by frame, the reproduction one one logic sector requires the error correction of all the frames. In an arrangement of Fig. 12(b) where user data is arranged in a frame direction and an error correction code is added thereto, error correction of one frame suffices in reaidng out data from one logic sector so that an error correction process can be simple. In this case, the user data is recorded into a recording medium in an interleaving direction as shown in Fig. 12(c), and thus the user data is dispersed as denoted by D0, D64, ..., D447 and D511. The code indicating the user data length which is recorded in the identifier region may be designed to represent the logic data length and the logic sector number. This design simplifies the logical handling of the data.

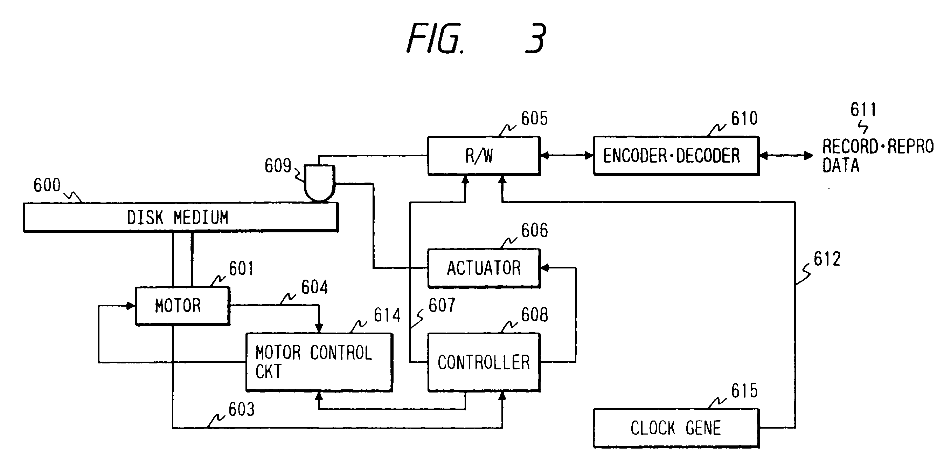

For various reasons, it is preferable to make constant the frequency of the recording and reproduction of data to attain a good reliability of the data. With reference to Fig. 3, a recording and reproducing apparatus for a disk-shaped recording medium 600 according to the invention includes a spindle motor 601, an actuator 606, and a data encoder/decoder 610. The apparatus of Fig. 3 is similar in structure to the apparatus of Fig. 2 except that a controller 608 outputs a speed command to a motor circuit 614 and a clock signal generator 615 generates a clock signal of a constant frequency.

The apparatus of Fig. 3 operates as follows. First, a controller 608 feeds the actuator 606 with a command of accessing a track starting point (for example, innermost ZONE). The controller 608 feeds the motor control circuit 614 with a command of a rotational speed at an innermost track (innermost ZONE). Then, the controller 608 establishes the synchronization with an index signal 603, and outputs a write timing signal 607 to an R/W circuit 605. The clock signal generator 615 outputs an R/W clock signal 612 of a constant frequency to the R/W circuit 605. The R/W circuit 605 receives input data from the data encoder 610, and records the input data into the disk-shaped recording medium 600 via recording head 609 in response to the write timing signal 607. The controller 608 feeds the actuator 606 with a command of accessing a next track so that the recording head 609 is moved and the recording process is repeated. When the recording head 609 reaches next ZONE, the controller 608 feeds the motor control circuit 614 with a new rotational speed command. In the data recording arrangement of Figs. 8(a), 8(b) and 8(c), the rotational speed command V(n) for ZONE(n) is given as:

$$V(n) = \{(I + DO + E) \times V0\}/\{(I + D0 + E + M \times (n - 1)\} \tag{7}$$

where V0 denotes the rotational speed for innermost ZONE; D0 denotes the user data capacity of the innermost track; I denotes the data capacity of the identifier region; n denotes the ZONE number; E denotes the error correction code length; and M denotes the increment of the user data amount between neighbouring ZONE's.

As previously described, the controller 608 feeds the motor control circuit 614 with the speed command so that the rotational speed is made variable. This design enables a constant frequency of the recording and reproducing of data, and hence the reliability of the data can be increased.

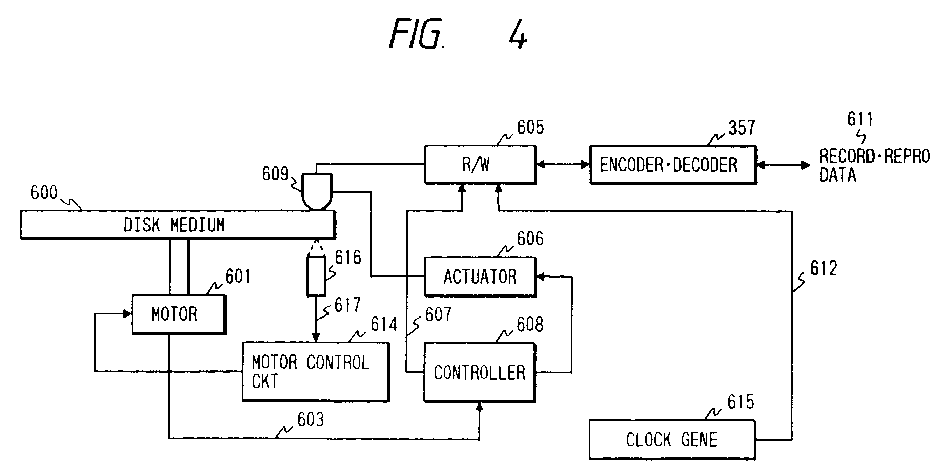

Fig. 4 shows a recording and reproducing apparatus which is usable with the recording medium of the invention and which realizes a constant frequency of the recording and reproduction of data. The apparatus includes a spindle motor 601, an actuator 606, a data encoder/decoder 610, and a clock signal generator 615. In Fig. 4, a disk-shaped recording medium 600 has a lower side composed of an optical information recording medium and an upper side composed of a magnetic information recording medium. The optical information recording medium stores servo information for rotating the spindle motor 601 at a constant linear velocity (for example, a compact disk). An optical head 616 reads out the servo information from the disk-shaped recording medium 600, and a motor control circuit 614 controls the spindle motor 601 in response to the servo information. As a result, the linear velocity of the disk-shaped recording medium 600 at the position of the optical head 616 is constant independent of a radial position in the disk-shaped recording medium 600. The actuator 606 drives a recording and reproducing head 609 and the optical head 616 while linking them together. Therefore, data is recorded into the disk-shaped recording medium 600 in the recording format of Fig. 1 although an R/W clock signal 612 has a constant frequency. In this case, the rotational speed varies track by track. Thus, it is preferable that one ZONE has one track.

**Claims**

1.  A disk-shaped recording medium comprising:

    a disk-shaped recording surface;
    a plurality of concentric recording tracks extending on the recording surface and for storing digital data;
    said recording tracks being directed into W data sectors (625) along a circumferential direction, the data sectors extending in approximately equal angular ranges, wherein W denotes a predetermined integer equal to one or more;
    said recording surface being divided into N zones (626-628) along a radial direction, wherein each of the N zones has R recording tracks, wherein N denotes a predetermined integer equal to two or more and R denotes a predetermined integer equal to one or more;
    an identifier region (623) provided in each of the data sectors for identifying said each of the data sectors; and
    a data region (624) provided in each of the data sectors for storing user data;
    wherein a data recording capacity of a data region of a data sector in first one of the zones is greater by M byte or bytes than a data recording capacity of a data region of a data sector in a second one of the zones which extends immediately inward of said first one of the zones, wherein M denotes a predetermined integer equal to one or more.

2.  A medium according to claim 1, wherein one side of the medium is provided with said recording surface, and the other side of the medium is provided with an optical recording surface.

3.  A medium according to claim 1 or 2, wherein W is equal to one.

4.  A medium according to claim 1, 2 or 3, wherein the identifier region (623) stores a code indicating a recording capacity of the related data region.

5.  A medium according to claim 1, 2, 3 or 4, wherein the data region stores data for error correction.

6.  A medium according to claim 5, wherein the data for error correction is interleaved.

7.  A medium according to claim 6, wherein the integer M is equal to P multiplied by an integer, and P denotes an interleaving length.

8.  A medium according to claim 6 or 7, wherein an interleaving length P in an inner zone of the zones is different from an interleaving length P in an outer zone of the zones.

9.  A medium according to claim 8, wherein the integer M is equal to F denoting a frame length.

10. A recording and reproducing apparatus for recording and reproducing data to or from a disk-shaped recording medium according to any one of the preceding claims, the apparatus comprising:

    a head for recording and reproducing identifier and user data into and from respective regions of the recording medium.

FIG. 1

623 } 625

624 }

r m

r 0

626 ZONE n

627 ZONE 2

628 ZONE 1

EP 0 833 319 A2

FIG. 2

FIG. 3

# FIG.  4

EP 0 833 319 A2

# FIG. 5

623
624
650

620 ZONE 1

621 ZONE 2

622 ZONE 3

r m

r 0

EP 0 833 319 A2

EP 0 833 319 A2

# FIG. 6

| IDENTIFIER REGION | | | | | DATA REGION | |
|---|---|---|---|---|---|---|
| | | | | | USER DATA | ERROR CORRECTION CODE |
| SYNC | ADDRESS | TRACK NUMBER | SECTOR NUMBER | ERROR DET | $D_0\ D_1\ \cdots\cdots\cdots\ D_{510}\ D_{511}$ | $P_0\ P_1\ P_2\ \cdots\cdots\cdots\ D_{30}\ D_{31}$ |

623  618  624  619

EP 0 833 319 A2

# FIG. 7

FRAME DIRECTION →

FRAME LENGTH F 68 BYTE

| $D_0$ $D_8$ | $D_{504}$ | $P_0$ $P_8$ $P_{16}$ $P_{24}$ |
| $D_1$ · | $D_{505}$ | $P_1$ $P_9$ $P_{17}$ $P_{25}$ |
| $D_2$ · | $D_{506}$ | $P_2$ $P_{10}$ $P_{18}$ $P_{26}$ |
| $D_3$ · | $D_{507}$ | $P_3$ $P_{11}$ $P_{19}$ $P_{27}$ |
| $D_4$ · | $D_{508}$ | $P_4$ $P_{12}$ $P_{20}$ $P_{28}$ |
| $D_5$ · | $D_{509}$ | $P_5$ $P_{13}$ $P_{21}$ $P_{29}$ |
| $D_6$ · | $D_{510}$ | $P_6$ $P_{14}$ $P_{22}$ $P_{30}$ |
| $D_7$ $D_{503}$ | $D_{511}$ | $P_7$ $P_{15}$ $P_{23}$ $P_{31}$ |

INTERLEAVING LENGTH P 8

INTERLEAVING DIRECTION

EP 0 833 319 A2

## FIG. 8(a)

623    618    624    619

| IDENTIFIER REGION | | | | | | DATA REGION | |
|---|---|---|---|---|---|---|---|
| SYNC | ADDRESS | TRACK NUMBER | SECTOR NUMBER | DATA LENGTH | ERROR DET | USER DATA | ERROR CORRECTION CODE |
| | | | | | | $D_0\ D_1\ \cdots\cdots\cdots\ D_{510}\ D_{511}$ | $P_0\ P_1\ P_2\ \cdots\cdots\ D_{30}\ D_{31}$ |

## FIG. 8(b)

623    618    624    619

| IDENTIFIER REGION | | | | | | DATA REGION | |
|---|---|---|---|---|---|---|---|
| SYNC | ADDRESS | TRACK NUMBER | SECTOR NUMBER | DATA LENGTH | ERROR DET | USER DATA | ERROR CORRECTION CODE |
| | | | | | | $D_0\ D_1\ \cdots\cdots\cdots\ D_{574}\ D_{575}$ | $P_0\ P_1\ P_2\ \cdots\cdots\ D_{30}\ D_{31}$ |

## FIG. 8(c)

623    618    624    619

| IDENTIFIER REGION | | | | | | DATA REGION | |
|---|---|---|---|---|---|---|---|
| SYNC | ADDRESS | TRACK NUMBER | SECTOR NUMBER | DATA LENGTH | ERROR DET | USER DATA | ERROR CORRECTION CODE |
| | | | | | | $D_0\ D_1\ \cdots\cdots\cdots\ D_{638}\ D_{639}$ | $P_0\ P_1\ P_2\ \cdots\cdots\ D_{30}\ D_{31}$ |

## FIG. 9(a)

| IDENTIFIER REGION | | | | | | DATA REGION | |
|---|---|---|---|---|---|---|---|
| SYNC | ADDRESS | TRACK NUMBER | SECTOR NUMBER | DATA LENGTH | ERROR DET | USER DATA | ERROR CORRECTION CODE |
| | | | | | | $D_0\ D_1\ \cdots\cdots\cdots\ D_{510}\ D_{511}$ | $P_0\ P_1\ P_2\ \cdots\cdots\ D_{30}\ D_{31}$ |

623　618　624　619

## FIG. 9(b)

| IDENTIFIER REGION | | | | | | DATA REGION | |
|---|---|---|---|---|---|---|---|
| SYNC | ADDRESS | TRACK NUMBER | SECTOR NUMBER | DATA LENGTH | ERROR DET | USER DATA | ERROR CORRECTION CODE |
| | | | | | | $D_0\ D_1\ \cdots\cdots\cdots\ D_{574}\ D_{575}$ | $P_0\ P_1\ P_2\ \cdots\cdots\ D_{34}\ D_{35}$ |

623　618　624　619

## FIG. 9(c)

| IDENTIFIER REGION | | | | | | DATA REGION | |
|---|---|---|---|---|---|---|---|
| SYNC | ADDRESS | TRACK NUMBER | SECTOR NUMBER | DATA LENGTH | ERROR DET | USER DATA | ERROR CORRECTION CODE |
| | | | | | | $D_0\ D_1\ \cdots\cdots\cdots\ D_{638}\ D_{639}$ | $P_0\ P_1\ P_2\ \cdots\cdots\ D_{38}\ D_{39}$ |

623　618　624　619

EP 0 833 319 A2

EP 0 833 319 A2

## FIG. 10(a)

FRAME LENGTH F 68 BYTE

INTERLEAVING LENGTH P 8

| $D_0$ | $D_8$ | | $D_{504}$ | $P_0$ | $P_8$ | $P_{16}$ | $P_{24}$ |
|---|---|---|---|---|---|---|---|
| $D_1$ | · | | $D_{505}$ | $P_1$ | $P_9$ | $P_{17}$ | $P_{25}$ |
| $D_2$ | · | | $D_{506}$ | $P_2$ | $P_{10}$ | $P_{18}$ | $P_{26}$ |
| $D_3$ | · | | $D_{507}$ | $P_3$ | $P_{11}$ | $P_{19}$ | $P_{27}$ |
| $D_4$ | | · | $D_{508}$ | $P_4$ | $P_{12}$ | $P_{20}$ | $P_{28}$ |
| $D_5$ | | · | $D_{509}$ | $P_5$ | $P_{13}$ | $P_{21}$ | $P_{29}$ |
| $D_6$ | | · | $D_{510}$ | $P_6$ | $P_{14}$ | $P_{22}$ | $P_{30}$ |
| $D_7$ | | $D_{503}$ | $D_{511}$ | $P_7$ | $P_{15}$ | $P_{23}$ | $P_{31}$ |

## FIG. 10(b)

FRAME LENGTH F 68 BYTE

INTERLEAVING LENGTH P 9

| $D_0$ | $D_9$ | | $D_{567}$ | $P_0$ | $P_9$ | $P_{18}$ | $P_{27}$ |
|---|---|---|---|---|---|---|---|
| $D_1$ | · | | $D_{568}$ | $P_1$ | $P_{10}$ | $P_{19}$ | $P_{28}$ |
| $D_2$ | · | | $D_{569}$ | $P_2$ | $P_{11}$ | $P_{20}$ | $P_{29}$ |
| $D_3$ | · | · | $D_{570}$ | $P_3$ | $P_{12}$ | $P_{21}$ | $P_{30}$ |
| $D_4$ | | · | $D_{571}$ | $P_4$ | $P_{13}$ | $P_{22}$ | $P_{31}$ |
| $D_5$ | | · | $D_{572}$ | $P_5$ | $P_{14}$ | $P_{23}$ | $P_{32}$ |
| $D_6$ | | · | $D_{573}$ | $P_6$ | $P_{15}$ | $P_{24}$ | $P_{33}$ |
| $D_7$ | | · | $D_{574}$ | $P_7$ | $P_{16}$ | $P_{25}$ | $P_{34}$ |
| $D_8$ | | $D_{566}$ | $D_{575}$ | $P_8$ | $P_{17}$ | $P_{26}$ | $P_{35}$ |

## FIG. 10(c)

FRAME LENGTH F 68 BYTE

INTERLEAVING LENGTH P 10

| $D_0$ | $D_{10}$ | | $D_{630}$ | $P_0$ | $P_{10}$ | $P_{20}$ | $P_{30}$ |
|---|---|---|---|---|---|---|---|
| $D_1$ | · | | $D_{631}$ | $P_1$ | $P_{11}$ | $P_{21}$ | $P_{31}$ |
| $D_2$ | · | | $D_{632}$ | $P_2$ | $P_{12}$ | $P_{22}$ | $P_{32}$ |
| $D_3$ | · | | $D_{633}$ | $P_3$ | $P_{13}$ | $P_{23}$ | $P_{33}$ |
| $D_4$ | | · | $D_{634}$ | $P_4$ | $P_{14}$ | $P_{24}$ | $P_{34}$ |
| $D_5$ | | · | $D_{635}$ | $P_5$ | $P_{15}$ | $P_{25}$ | $P_{35}$ |
| $D_6$ | | · | $D_{636}$ | $P_6$ | $P_{16}$ | $P_{26}$ | $P_{36}$ |
| $D_7$ | | · | $D_{637}$ | $P_7$ | $P_{17}$ | $P_{27}$ | $P_{37}$ |
| $D_8$ | | · | $D_{638}$ | $P_8$ | $P_{18}$ | $P_{28}$ | $P_{38}$ |
| $D_9$ | | $D_{679}$ | $D_{639}$ | $P_9$ | $P_{19}$ | $P_{29}$ | $P_{39}$ |

FIG. 11

## FIG. 12(a)

| PHYSICAL DATA SECTOR | $D_0$ $D_1$ ... $D_{62}$ $D_{63}$ | $D_{64}$ $D_{65}$ ... $D_{126}$ $D_{127}$ | $D_{128}$ ...... $D_{382}$ $D_{383}$ | $D_{384}$ $D_{385}$ ... $D_{446}$ $D_{447}$ | $D_{448}$ $D_{449}$ ... $D_{510}$ $D_{511}$ |
|---|---|---|---|---|---|
| LOGIC DATA SECTOR | LOGIC SECTOR 1 | LOGIC SECTOR 2 | | LOGIC SECTOR 7 | LOGIC SECTOR 8 |

## FIG. 12(b)

FRAME LENGTH F 68 BYTE

INTERLEAVING LENGTH P 8

| $D_0$ | $D_1$ | .......... | $D_{62}$ | $D_{63}$ | $P_0$ | $P_8$ | $P_{16}$ | $P_{24}$ |
|---|---|---|---|---|---|---|---|---|
| $D_{64}$ | $D_{65}$ | .......... | $D_{126}$ | $D_{127}$ | $P_1$ | $P_9$ | $P_{17}$ | $P_{25}$ |
| $D_{128}$ | $D_{129}$ | .......... | $D_{190}$ | $D_{191}$ | $P_2$ | $P_{10}$ | $P_{18}$ | $P_{26}$ |
| $D_{192}$ | $D_{193}$ | .......... | $D_{254}$ | $D_{255}$ | $P_3$ | $P_{11}$ | $P_{19}$ | $P_{27}$ |
| $D_{256}$ | $D_{257}$ | .......... | $D_{318}$ | $D_{319}$ | $P_4$ | $P_{12}$ | $P_{20}$ | $P_{28}$ |
| $D_{320}$ | $D_{321}$ | .......... | $D_{382}$ | $D_{383}$ | $P_5$ | $P_{13}$ | $P_{21}$ | $P_{29}$ |
| $D_{384}$ | $D_{385}$ | .......... | $D_{446}$ | $D_{447}$ | $P_6$ | $P_{14}$ | $P_{22}$ | $P_{30}$ |
| $D_{448}$ | $D_{449}$ | .......... | $D_{510}$ | $D_{512}$ | $P_7$ | $P_{15}$ | $P_{23}$ | $P_{31}$ |

## FIG. 12(c)

623      618      624    619

| IDENTIFIER REGION | | | | | | | DATA REGION | |
|---|---|---|---|---|---|---|---|---|
| SYNS | ADDRESS | TRACK NUMBER | SECTOR NUMBER | DATA LENGTH | SECTOR NUMBER | ERROR DET | USER DATA | ERROR CORRECTION CODE |
| | | | | | | | $D_0$ $D_{64}$ $D_{128}$ $D_{192}$ ......... $D_{255}$ $D_{319}$ $D_{383}$ $D_{447}$ $D_{511}$ | $P_0$ $P_1$ ......... $P_{30}$ $P_{31}$ |

EP 0 833 319 A2

EP 0 833 319 A2

## FIG. 13(a)

FRAME LENGTH F 68 BYTE

INTERLEAVING LENGTH P 8

| $D_0$ | $D_1$ | $\cdots\cdots\cdots$ | $D_{62}$ | $D_{63}$ | $P_0$ | $P_8$ | $P_{16}$ | $P_{24}$ |
|---|---|---|---|---|---|---|---|---|
| $D_{64}$ | $D_{65}$ | $\cdots\cdots\cdots$ | $D_{126}$ | $D_{128}$ | $P_1$ | $P_9$ | $P_{17}$ | $P_{25}$ |
| $D_{128}$ | $D_{129}$ | $\cdots\cdots\cdots$ | $D_{190}$ | $D_{191}$ | $P_2$ | $P_{10}$ | $P_{18}$ | $P_{26}$ |
| $D_{192}$ | $D_{193}$ | $\cdots\cdots\cdots$ | $D_{254}$ | $D_{255}$ | $P_3$ | $P_{11}$ | $P_{19}$ | $P_{27}$ |
| $D_{256}$ | $D_{257}$ | $\cdots\cdots\cdots$ | $D_{318}$ | $D_{319}$ | $P_4$ | $P_{12}$ | $P_{20}$ | $P_{28}$ |
| $D_{320}$ | $D_{321}$ | $\cdots\cdots\cdots$ | $D_{382}$ | $D_{383}$ | $P_5$ | $P_{13}$ | $P_{21}$ | $P_{29}$ |
| $D_{384}$ | $D_{385}$ | $\cdots\cdots\cdots$ | $D_{446}$ | $D_{447}$ | $P_6$ | $P_{14}$ | $P_{22}$ | $P_{30}$ |
| $D_{448}$ | $D_{449}$ | $\cdots\cdots\cdots$ | $D_{510}$ | $D_{511}$ | $P_7$ | $P_{15}$ | $P_{23}$ | $P_{31}$ |

## FIG. 13(b)

FRAME LENGTH F 68 BYTE

INTERLEAVING LENGTH P 9

| $D_0$ | $D_1$ | $\cdots\cdots\cdots$ | $D_{62}$ | $D_{63}$ | $P_0$ | $P_9$ | $P_{18}$ | $P_{27}$ |
|---|---|---|---|---|---|---|---|---|
| $D_{64}$ | $D_{65}$ | $\cdots\cdots\cdots$ | $D_{126}$ | $D_{128}$ | $P_1$ | $P_{10}$ | $P_{19}$ | $P_{28}$ |
| $D_{128}$ | $D_{129}$ | $\cdots\cdots\cdots$ | $D_{190}$ | $D_{191}$ | $P_2$ | $P_{11}$ | $P_{20}$ | $P_{29}$ |
| $D_{192}$ | $D_{193}$ | $\cdots\cdots\cdots$ | $D_{254}$ | $D_{255}$ | $P_3$ | $P_{12}$ | $P_{21}$ | $P_{30}$ |
| $D_{256}$ | $D_{257}$ | $\cdots\cdots\cdots$ | $D_{318}$ | $D_{319}$ | $P_4$ | $P_{13}$ | $P_{22}$ | $P_{31}$ |
| $D_{320}$ | $D_{321}$ | $\cdots\cdots\cdots$ | $D_{382}$ | $D_{383}$ | $P_5$ | $P_{14}$ | $P_{23}$ | $P_{32}$ |
| $D_{384}$ | $D_{385}$ | $\cdots\cdots\cdots$ | $D_{446}$ | $D_{447}$ | $P_6$ | $P_{15}$ | $P_{24}$ | $P_{33}$ |
| $D_{448}$ | $D_{449}$ | $\cdots\cdots\cdots$ | $D_{510}$ | $D_{511}$ | $P_7$ | $P_{16}$ | $P_{25}$ | $P_{34}$ |
| $D_{512}$ | $D_{513}$ | $\cdots\cdots\cdots$ | $D_{574}$ | $D_{575}$ | $P_8$ | $P_{17}$ | $P_{26}$ | $P_{35}$ |

## FIG. 13(c)

FRAME LENGTH F 68 BYTE

INTERLEAVING LENGTH P 10

| $D_0$ | $D_1$ | $\cdots\cdots\cdots$ | $D_{62}$ | $D_{63}$ | $P_0$ | $P_{10}$ | $P_{20}$ | $P_{30}$ |
|---|---|---|---|---|---|---|---|---|
| $D_{64}$ | $D_{65}$ | $\cdots\cdots\cdots$ | $D_{126}$ | $D_{128}$ | $P_1$ | $P_{11}$ | $P_{21}$ | $P_{31}$ |
| $D_{128}$ | $D_{129}$ | $\cdots\cdots\cdots$ | $D_{190}$ | $D_{191}$ | $P_2$ | $P_{12}$ | $P_{22}$ | $P_{32}$ |
| $D_{192}$ | $D_{193}$ | $\cdots\cdots\cdots$ | $D_{254}$ | $D_{255}$ | $P_3$ | $P_{13}$ | $P_{23}$ | $P_{33}$ |
| $D_{256}$ | $D_{257}$ | $\cdots\cdots\cdots$ | $D_{318}$ | $D_{319}$ | $P_4$ | $P_{14}$ | $P_{24}$ | $P_{34}$ |
| $D_{320}$ | $D_{321}$ | $\cdots\cdots\cdots$ | $D_{382}$ | $D_{383}$ | $P_5$ | $P_{15}$ | $P_{25}$ | $P_{35}$ |
| $D_{384}$ | $D_{385}$ | $\cdots\cdots\cdots$ | $D_{446}$ | $D_{447}$ | $P_6$ | $P_{16}$ | $P_{26}$ | $P_{36}$ |
| $D_{448}$ | $D_{449}$ | $\cdots\cdots\cdots$ | $D_{510}$ | $D_{511}$ | $P_7$ | $P_{17}$ | $P_{27}$ | $P_{37}$ |
| $D_{512}$ | $D_{513}$ | $\cdots\cdots\cdots$ | $D_{574}$ | $D_{575}$ | $P_8$ | $P_{18}$ | $P_{28}$ | $P_{38}$ |
| $D_{576}$ | $D_{577}$ | $\cdots\cdots\cdots$ | $D_{638}$ | $D_{639}$ | $P_9$ | $P_{19}$ | $P_{29}$ | $P_{39}$ |

FIG. 14(a)

FRAME LENGTH F 68 BYTE

INTERLEAVING LENGTH P 8

| | $D_0$ | $D_8$ | ... | $D_{504}$ | $P_0$ | $P_8$ | $P_{24}$ |
| | $D_1$ | | | $D_{505}$ | $P_1$ | | $P_{25}$ |
| | $D_2$ | | | $D_{506}$ | $P_2$ | | $P_{26}$ |
| | $D_3$ | | | $D_{507}$ | $P_3$ | | $P_{27}$ |
| | $D_4$ | | | $D_{508}$ | $P_4$ | | $P_{28}$ |
| | $D_5$ | | | $D_{509}$ | $P_5$ | | $P_{29}$ |
| | $D_6$ | | | $D_{510}$ | $P_6$ | | $P_{30}$ |
| | $D_7$ | | | $D_{503}$ $D_{511}$ | $P_7$ | | $P_{23}$ $P_{31}$ |

FIG. 14(b)

FRAME LENGTH F 76 BYTE

INTERLEAVING LENGTH P 8

| | $D_0$ | $D_8$ | ... | $D_{568}$ | $P_0$ | $P_8$ | $P_{24}$ |
| | $D_1$ | | | $D_{569}$ | $P_1$ | | $P_{25}$ |
| | $D_2$ | | | $D_{570}$ | $P_2$ | | $P_{26}$ |
| | $D_3$ | | | $D_{571}$ | $P_3$ | | $P_{27}$ |
| | $D_4$ | | | $D_{572}$ | $P_4$ | | $P_{28}$ |
| | $D_5$ | | | $D_{573}$ | $P_5$ | | $P_{29}$ |
| | $D_6$ | | | $D_{574}$ | $P_6$ | | $P_{30}$ |
| | $D_7$ | | | $D_{567}$ $D_{575}$ | $P_7$ | | $P_{23}$ $P_{31}$ |

FIG. 14(c)

FRAME LENGTH F 84 BYTE

INTERLEAVING LENGTH P 8

| | $D_0$ | $D_8$ | ... | $D_{632}$ | $P_0$ | $P_8$ | $P_{24}$ |
| | $D_1$ | | | $D_{633}$ | $P_1$ | | $P_{25}$ |
| | $D_2$ | | | $D_{634}$ | $P_2$ | | $P_{26}$ |
| | $D_3$ | | | $D_{635}$ | $P_3$ | | $P_{27}$ |
| | $D_4$ | | | $D_{636}$ | $P_4$ | | $P_{28}$ |
| | $D_5$ | | | $D_{637}$ | $P_5$ | | $P_{29}$ |
| | $D_6$ | | | $D_{638}$ | $P_6$ | | $P_{30}$ |
| | $D_7$ | | | $D_{631}$ $D_{639}$ | $P_7$ | | $P_{23}$ $P_{31}$ |